(19) Europäisches Patentamt
European Patent Office
Office européen des brevets

(11) **EP 3 544 758 B1**

(12) **EUROPÄISCHE PATENTSCHRIFT**

(45) Veröffentlichungstag und Bekanntmachung des Hinweises auf die Patenterteilung:
**25.05.2022   Patentblatt 2022/21**

(21) Anmeldenummer: **17811483.1**

(22) Anmeldetag: **22.11.2017**

(51) Internationale Patentklassifikation (IPC):
**B23G 7/02** *(2006.01)*

(52) Gemeinsame Patentklassifikation (CPC):
**B23G 7/02**

(86) Internationale Anmeldenummer:
**PCT/EP2017/080130**

(87) Internationale Veröffentlichungsnummer:
**WO 2018/096002 (31.05.2018 Gazette 2018/22)**

(54) **GEWINDEFORMER**

THREAD FORMER

TARAUD TRAVAILLANT PAR REFOULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2016   DE 102016122701**

(43) Veröffentlichungstag der Anmeldung:
**02.10.2019   Patentblatt 2019/40**

(73) Patentinhaber: **EMUGE-Werk Richard Glimpel GmbH & Co.KG Fabrik für Präzisionswerkzeuge**
**91207 Lauf a.d. Pegnitz (DE)**

(72) Erfinder:
• **GLIMPEL, Helmut**
**91207 Lauf (DE)**

• **BERSCHNEIDER, Thomas**
**91249 Weigendorf (DE)**
• **FENZEL, Jürgen**
**91245 Simmelsdorf (DE)**

(74) Vertreter: **Schröer, Gernot H.**
**Meissner Bolte Patentanwälte**
**Rechtsanwälte Partnerschaft mbB**
**Bankgasse 3**
**90402 Nürnberg (DE)**

(56) Entgegenhaltungen:
**EP-A1- 0 767 024      DE-A1-102005 019 921**
**DE-A1-102005 051 174   DE-A1-102010 054 476**
**DE-A1-102015 214 932   JP-A- H01 153 229**
**JP-A- 2002 370 126     JP-U- S60 153 725**
**US-A- 2 991 491**

**Beschreibung**

Die Erfindung betrifft einen Gewindeformer und ein Verfahren zur Herstellung eines Gewindeformers.

Zur Gewindeerzeugung oder Gewindenachbearbeitung sind neben spanabhebenden auch spanlose Verfahren und Gewindewerkzeuge bekannt. Unter die spanlosen Gewindeerzeugungswerkzeuge fallen beispielswiese die sogenannten Gewindefurcher.

Gewindefurcher sind axial zu ihrer Werkzeugachse arbeitende Gewindewerkzeuge, und weisen in der Regel einen an einem Werkzeugschaft ausgebildeten Arbeitsbereich, der eine schraubenförmig die Werkzeugachse umlaufende Anordnung von Wirkflächen, die Formkeile, Drückstollen oder auch Furchzähne genannt werden, aufweist.

Mittels der Wirkflächen wird das Gewinde bei Drehung des Werkzeugs um die Werkzeugachse und axialem Vorschub entlang der Werkzeugachse in das Werkstück eingedrückt. Gewindefurcher erzeugen das Gewinde also durch Druck- bzw. Kaltumformung des Werkstücks an der jeweiligen Kontaktstelle/- fläche.

Ein Vorteil der spanlos arbeitenden Gewindewerkzeuge, d.h. Gewindefurcher, gegenüber spanabhebenden Gewindewerkzeugen ist, dass durch die Umformung des Werkstücks bei der Erzeugung des Gewindes gegenüber fräsgeformten Gewinden eine Verfestigung im Bereich der Gewindestruktur erreicht wird, wodurch ein verschleißfesteres Gewinde erzeugt werden kann.

Der Schaft eines Gewindefurchers ist in der Regel zylindrisch ausgeführt und mit seinem dem Werkstück und Arbeitsbereich abgewandten Ende im Spannfutter einer Werkzeugmaschine oder eines Antriebs aufgenommen und gehalten.

Der Arbeitsbereich ist mit einem Gewindeformprofil versehen, das eine Gegenform zu dem zu erzeugenden Gewinde darstellt, insbesondere also die gleiche Gewindesteigung aufweist. Im Längsschnitt bzw. im Gewindeprofil weist das Gewindeerzeugungswerkzeug also abwechselnd Erhöhungen bzw. Zähne und Vertiefungen bzw. Rillen auf, die normalerweise jeweils denselben Abstand zueinander besitzen, was bedeutet, dass die Steigung der Gewindegänge konstant ist. Die Zähne können in ihrem Querschnitt radial nach außen spitzwinkelig zulaufen, und können in deren Kopf- oder Scheitelbereich abgerundet ausgebildet sein.

In Querschnitten innerhalb des Arbeitsbereichs weist ein Gewindefurcher in der Regel einen annähernd polygonalen Umriss auf, wobei die Wirkflächen (Formkeile, Drückstollen bzw. Furchzähne) die Eckbereiche eines entsprechenden Polygons bilden. Zwischen den Eckbereichen oder Drückstollen können beispielsweise Nuten, insbesondere Kühl- und/oder Schmiernuten ausgebildet. Alternativ oder zusätzlich kann der Gewindefurcher im Inneren des Werkzeugs verlaufende Kanäle aufweisen, die jeweils zum Zuführen von Kühl- und/oder Schmiermittel ausgebildet sein können.

Bei Gewindefurchern kann vorgesehen sein, dass sich der Arbeitsbereich des Gewindefurchers zu der vom Werkzeugschaft abgewandt gelegenen Werkzeugspitze hin in einem z.B. kegelförmigen Anlaufbereich oder Anfurchbereich verjüngt. Beispielsweise können die Drückstollen dort, insbesondere bei weitgehend unveränderter Form der Drückstollen, nach innen versetzt angeordnet sein.

Durch den Anfurchbereich kann das Gewindeprofil, insbesondere die Gewindetiefe, sukzessive durch zunehmende radiale Zustellung der Drückstollen erzeugt werden. Ferner kann das Eindringen der ersten Drückstollen oder Anfurchzähne im Anfurchbereich in die Werkstückoberfläche z.B. in die Innenwand der Bohrung erleichtert werden, wobei Umformkräfte an den Drückstollen reduziert werden können.

Die Zunahme der radialen Zustellung oder des radialen Abstands von der Werkzeugachse zwischen benachbarten oder aufeinander folgenden Drückstollen bzw. Furchzähnen im Anlaufbereich/Anfurchbereich wird auch als Umformhöhe bezeichnet.

In einem sich an den Anlaufbereich anschließenden Führungs- bzw. Kalib-rierbereich bleibt die radiale Zustellung oder die radiale Länge der Drückstollen oder Furchzähne bzw. der Außendurchmesser konstant. Dieser Bereich dient zur Führung des Gewindefurchers in dem vom Anlaufbereich durch Umformung erzeugten Gewinde und gegebenenfalls zum Nachglätten oder Kalibrieren des Gewindes.

Zur Erzeugung eines Innengewindes mit einem Gewindefurcher wird in der Regel zunächst eine Bohrung in dem Werkstück erzeugt mit einem kleineren Innendurchmesser als der Außendurchmesser des Arbeitsbereichs des Gewindefurchers. Anschließend wird der Gewindefurcher dann mit dem Arbeitsbereich voran mit definiertem Axialvorschub und definierter Rotation um die Längsachse des Werkzeugschafts, d.h. um die Werkzeugachse, in Gewindeformrichtung, also Rechtslauf bei Rechtsgewinde und Linkslauf bei Linksgewinde, in die Bohrung eingeführt.

Beim Einführen des Gewindefurchers in die Bohrung werden die Drückstollen, insbesondere Gewindespitzen und zugehörige Umformflächen des Gewindefurchers, in oder an die Oberfläche des Werkstücks bzw. der Bohrung gedrückt. Der Werkstoff des Werkstücks wird dabei plastisch verformt und radial in die Vertiefungen bzw. Rillen zwischen axial benachbarten Drückstollen bzw. Furchzähnen des Arbeitsbereichs des Gewindefurchers verdrängt.

Das Drehmoment und die Reibung, insbesondere die mechanisch-tribologische Belastung steigt beim Anfurchen bis zum Eingriff aller Anfurchzähne an. Nach ausreichendem Eindrehen des Gewindefurchers wird dieser unter Rotation in entgegengesetzter Richtung aus dem erzeugten Gewinde herausgedreht, wobei das Gleitreibungsmoment und die mechanisch-tribologische Belastung beim Herausdrehen kontinuierlich abnimmt.

Bei der Herstellung des Gewindes durch Umformung des Werkstücks treten an den Drückstollen bzw. Furchzähnen nicht unerhebliche Kräfte, insbesondere Reibungskräfte auf, die einerseits die Umformung des Werkstücks hervorrufen, und andererseits als mechanische Belastungen die Standzeit der Drückstollen bzw. Furchzähne maßgeblich beeinflussen. Insbesondere die, insbesondere radiale, Zustellung und Form der Drückstollen bzw. Furchzähne beeinflussen nicht nur die auftretenden Kräfte, sondern auch die Qualität des erzeugten Gewindes.

Aus der DE 11 2009 005 043 T5 ist ein Gewindefurcher bekannt mit einer speziellen Struktur der Furchzähne, die dazu führen soll, dass Reibungsmoment und Wärmeerzeugung bei der Gewindeherstellung verringert werden sollen. Aus der DE 10 2012 100 734 A1 ist ein Gewindeformer bekannt, bei welchem zur Verbesserung des Anformverhaltens vorgeschlagen ist, den Teilungswinkel zwischen ersten und zweiten Drückstollen entlang der Formgebungskurve des Arbeitsbereichs anzupassen.

Die JP 2002-370126 A offenbart einen Gewindeformer mit den Merkmalen des Oberbegriffs des unabhängigen Anspruchs 1.

Ausgehend davon ist es eine Aufgabe der Erfindung, einen neuartigen, insbesondere alternativen, Gewindeformer anzugeben. Insbesondere soll ein Gewindeformer angegeben werden, welche eine präzise Gewindeausformung ermöglichen und/oder mit welchem im Vergleich zu herkömmlichen Gewindeformern beispielswiese verbesserte Standzeiten beim Gewindeformer erreicht werden können.

Diese Aufgabe wird gelöst durch die Merkmale des unabhängigen Anspruchs.

Ausgestaltungen und Varianten ergeben sich insbesondere aus den abhängigen Ansprüchen, und des Weiteren aus der nachfolgenden Beschreibung, insbesondere der hierin beschriebenen Ausgestaltungen und Ausführungsformen.

Nach einer Ausgestaltung der Erfindung ist ein Gewindeformer (insbesondere: Gewindefurcher), d.h. ein Werkzeug zur Erzeugung eines Gewindes, vorgesehen, welcher ausgebildet und eingerichtet ist zur rotatorisch-translatorisch spanlosen Erzeugung eines Gewindes.

Dabei soll unter dem Begriff der Erzeugung eines Gewindes insbesondere verstanden werden sowohl eine Neuherstellung eines Gewindes als auch eine Nachbearbeitung eines bestehenden Gewindes in oder an einem Werkstück. Unter dem Begriff "rotatorisch-translatorisch" soll verstanden werden, dass der Gewindeformer bei der Herstellung des Gewindes um dessen Längsachse (insbesondere: Werkzeugachse, Rotationsachse) rotiert wird (rotatorischer Anteil), und gleichzeitig in Richtung, d.h. parallel, zur Längsachse bewegt wird (translatorischer Anteil).

Unter einer spanlosen Herstellung eines Gewindes durch einen Gewindeformer bzw. Gewindefurcher soll insbesondere verstanden werden, dass das Gewinde in oder an einem Werkstück im Wesentlichen durch Materialumformung am Werkstück, insbesondere Kaltumformung, erzeugt wird.

Durch Umformung hergestellte Gewinde weisen, wie bereits erläutert, gegenüber spanend hergestellten Gewinden den Vorteil auf, dass durch einen verbesserten Faserverlauf im Werkstückmaterial verbesserte Festigkeiten im Bereich der Gewindezähne/-furchen erreicht werden kann.

Der vorgeschlagene Gewindeformer umfasst einen, d.h. zumindest einen, insbesondere einen oder mehr als einen, Gewindeformungsabschnitt mit einer Vielzahl an Drückstollen (insbesondere: Wirkflächen, Formkeile, Furchzähne). Die Drückstollen können insbesondere ausgebildet sein als bezüglich der Längsachse des Gewindeformers radial nach außen ragende (insbesondere: vorspringende) Stollen (insbesondere: Zähne, Keile) zum Erzeugen des Gewindes und/oder zur Nachbearbeitung eines/des Gewindes.

Die Drückstollen können insbesondere derart ausgebildet sein, dass durch Eindrücken der Drückstollen das Werkstück am oder im jeweiligen Oberflächen- und/oder Kontaktbereich umgeformt werden kann, und dass ein im Wesentlichen durch die Struktur der Drückstollen und der dazwischen befindlichen Vertiefungen (insbesondere: Rillen) definiertes Gewinde ausgebildet werden kann. Die Drückstollen sind in Ausgestaltungen der Erfindung jeweils unter vorgegebenen zwischen benachbarten Drückstollen definierten Teilungswinkeln entlang einer die Werkzeugachse (insbesondere: Rotationsachse, Längsachse), insbesondere im Wesentlichen spiralförmig, umlaufenden Formgebungskurve angeordnet. Eine spiralförmige Formgebungskurve kann sich insbesondere aus der jeweiligen Steigung des herzustellenden Gewindes ergeben.

Gemäß der Erfindung ist jeder Teilungswinkel zwischen entlang der Formgebungskurve benachbarten Drückstollen kleiner oder gleich einem vorgegebenen maximalen Teilungswinkel.

Gemäß der Erfindung ist der maximale Teilungswinkel so festgelegt, dass die folgende Bedingung:

$$T_{max} = \sin^{-1}((a \times ND^y + b \times ND + c) \times 2 \times \pi);$$

erfüllt ist für

i) $8 \leq ND < 10$ mit a=-0,0008, b=0,00705, c=0,1325, y=2;
ii) $10 \leq ND < 12$ mit a=1,7924/(2 x $\pi$), b=0, c=0, y=-0,408; oder
iii) $12 \leq ND \leq 20$ mit a=0,751/(2 x $\pi$), b=0, c=0, y=-0,104;

wobei $T_{max}$ der maximale Teilungswinkel und ND der Betrag des in Millimeter gemessenen Nenngewindeformerdurchmessers sind. In obiger Beziehung entspricht das Zeichen "x" der mathematischen Multiplikation.

Unter dem Nenngewindeformerdurchmesser wird der Nenndurchmesser des Gewindeformers ohne Berücksichtigung von bzw. unabhängig von etwa vorhandenen Über- oder Untermaßen verstanden, welcher im Wesentlichen gegeben ist durch den Nenndurchmesser des, sich an einen ggf. vorhandenen Anlaufbereich (insbesondere: Anfurchbereich) anschließenden, Führungsbereichs (insbesondere: Kalibrierbereichs) des Gewindeformers. Unter dem Nenndurchmesser, d.h. Nenngewindeformerdurchmesser, wird insbesondere der kleinste zulässige Außendurchmesser eines zugehörigen Muttergewindes verstanden.

Unter dem Teilungswinkel wird der bezüglich der Axialprojektion und durch die Mittenebenen zweier entlang der Formgebungskurve aufeinanderfolgender Drückstollen definierte Zwischenwinkel verstanden. Unter dem Teilungswinkel wird der bezüglich der Werkzeugachse in Richtung der Formgebungskurve bzw. in Umfangsrichtung gemessene Zwischenwinkel zwischen längs der Formgebungskurve bzw. Umfangsrichtung benachbarter Drückstollen verstanden. Insoweit entspricht der Begriff Teilungswinkel der in dem in der Technik üblichen Verständnis.

Bei Gewindeformern in den angegebenen Nenndurchmesserbereichen zu i) bis iii), deren Drückstollen entsprechend der gegebenen Beziehung angeordnet sind, hat sich herausgestellt, dass eine gegenüber Gewindeformern mit größeren Teilungswinkeln deutlich verbesserte Standzeit, insbesondere bei vergleichbarer bzw. sogar verbesserter Gewindequalität erreicht werden kann. Beispielsweise hat sich bei Feldexperimenten und Untersuchungen herausgestellt, dass entsprechend der Erfindung ausgebildete Gewindeformer vorteilhafterweise eine verlängerte Standzeit aufweisen, die gegenüber herkömmlichen Gewindeformern um einem Faktor von 1,5 bis 2,0 erhöht sein kann.

Die nach der angegebenen Beziehung ermittelten Teilungswinkel sind generell kleiner als die aus dem Stand der Technik bekannten Teilungswinkeln, was insbesondere bedeutet, dass Anzahl der entlang der Formkurve angeordneten Drückstollen über einen vollen Umlauf größer ist als bei Gewindeformern nach dem Stand der Technik.

Insbesondere ist es eine Erkenntnis der Erfindung, dass der sich aus der angegebenen Beziehung ergebende maximal zulässige Abstand, insbesondere Mittenabstand, der Drückstollen und damit einhergehend die Anzahl der Drückstollen längs der Formgebungskurve, wesentlichen Einfluss auf die Standzeit haben können. Insoweit ist es eine Erkenntnis der Erfindung, dass die Standzeit und/oder Gewindequalität/-festigkeit durch eine Reduktion des maximalen Teilungswinkels, bzw. durch eine Erhöhung der Anzahl an Drückstollen im Vergleich zu herkömmlichen Gewindeformern erreicht werden kann/können, wobei sich die angegebene Beziehung für den maximalen Teilungswinkel als besonders vorteilhaft erwiesen hat.

Durch eine Anordnung der Drückstollen entsprechend der obigen Beziehung, beispielswiese mit kleinerem Umfangsabstand bzw. kleinerem Teilungswinkel als vergleichbare Gewindeformer im Stand der Technik, kann eine deutliche Erhöhung der Standzeiten erreicht werden, selbst wenn durch die Vergrößerung der Anzahl der Drückstollen bedingt, erhöhte Reibung und einhergehend damit erhöhte Drehmomente bei der Herstellung eines Gewindes auftreten. Bei kleinerem Teilungswinkel, kann bei der Herstellung eines Gewindes ein Rückfedern im plastischen Anteil des zu formenden Gewindes reduziert werden. Damit einhergehend können sich für die einzelnen Formzähne insbesondere Minderbelastungen ergeben, beispielsweise auf Grund des verkürzten Umfangsabstands zwischen den aufeinanderfolgenden Drückstegen, insbesondere im Anformkegelbereich des Gewindeformers.

Im Folgenden werden weitere Ausgestaltungen der Erfindung beschrieben.

In Ausgestaltungen kann vorgesehen sein, dass jeder der Teilungswinkel des

Weiteren derart gewählt ist, dass die Drückstollenanzahl der entlang der Formgebungskurve aufeinanderfolgend vorhandenen Drückstollen für jeden Umlauf längs der Formgebungskurve einen ganzzahligen Wert, insbesondere einen ungeradzahligen Wert, aufweist.

Insbesondere können in Ausgestaltungen die Teilungswinkel derart gewählt sein, dass einerseits die Teilungswinkel kleiner als der maximale Teilungswinkel sind, und dass andererseits pro Umlauf längs der Formgebungskurve des Gewindeformungsabschnitts eine ganzzahlige, insbesondere ungeradzahlige, Anzahl an Drückstegen vorhanden ist. Insbesondere bei Verwendung einer ungeradzahligen Drückstollenanzahl können vorteilhafte Standzeiten für einen entsprechend ausgebildeten Gewindeformer erreicht werden. In Ausgestaltungen können die Teilungswinkel derart gewählt sein, dass die Drückstollenanzahl der entlang der Formgebungskurve aufeinanderfolgend vorhandenen Drückstollen durch einen ungeradzahligen Wert gegeben ist.

Gemäß der Erfindung ist vorgesehen, dass der maximale Teilungswinkel, und/oder die Teilungswinkel so festgelegt ist/sind, dass die Drückstollenanzahl für zumindest einen, optional für jeden, Umlauf längs der Formgebungskurve (9) für Nenngewindeformerdurchmesser (Da) zwischen 8 mm und weniger als 10 mm genau 7 beträgt.

Die Teilungswinkel können beispielswiese derart gewählt sein, dass diese für alle benachbarten Drückstollen im Wesentlichen denselben Wert aufweisen.

In Varianten können die Teilungswinkel derart gewählt sein, dass diese für längs der Formgebungskurve aufeinanderfolgende Drückstollen unterschiedlich sind, insbesondere entsprechend eines vorgegebenen Musters bzw. einer jeweils vorgegebenen Vorschrift. Beispielsweise können die Teilungswinkel mit einer vorgegebenen Periodizität in Umfangsrichtung wiederholt werden.

In weiteren Ausgestaltungen können die Teilungswinkel derart gewählt sein, dass die Summe der Teilungswinkel zwischen einer jeweils vorgegebenen Anzahl an Drückstollen längs der Formkurve einen Vollwinkel, d.h. 360°, ergibt.

In Ausgestaltungen, insbesondere in letzterem Fall, kann vorgesehen sein, dass die Teilungswinkel zwischen benachbarten Drückstollen unter Einhaltung der hierin vorgeschlagenen Beziehung für den maximalen Teilungswinkel derart gewählt sind, dass in Axialprojektion des Gewindeformers betrachtet mehrere Gruppen von Drückstollen hintereinander, insbesondere deckungsgleich hintereinander, angeordnet sind.

Eine jeweilige Gruppe von Drückstollen kann in Ausgestaltungen einen sich in Axialrichtung erstreckenden Drücksteg ausbilden, wobei benachbarte Drückstege durch zwischenliegende Nuten, insbesondere für Kühl- und/oder Schmiermittel, voneinander getrennt sein können.

Insbesondere bei in Axialprojektion deckungsgleicher Anordnung der Drückstollen einer Gruppe können Drückstege bzw. Nuten erhalten werden, die parallel zur Längsachse des Gewindeformers verlaufen. Bei Ausgestaltungen mit nicht deckungsgleicher Anordnung können Gruppen von Drückstegen erhalten werden, bei welchen der Verlauf der Drückstollen bzw. der Verlauf der Nuten einer helikalen Bahn oder Kurve folgt.

In Ausgestaltungen kann vorgesehen sein, dass der Teilungswinkel, d.h. die Teilungswinkel zwischen benachbarten Drückstollen, derart festgelegt ist/sind, dass die Drückstollenanzahl der entlang der Formgebungskurve aufeinanderfolgend vorhandenen Drückstollen für jeden Umlauf längs der Formgebungskurve für Nenndurchmesser zwischen 10 mm und weniger als 12 mm zumindest 9 (in Worten: Neun), insbesondere genau 9 (in Worten: Neun), beträgt, und dass die Drückstollenanzahl für Nenndurchmesser von 12 mm oder mehr als 12 mm, vorzugsweise für Nenndurchmesser zwischen 12 mm und 20 mm, zumindest 11 (in Worten: Elf), insbesondere genau 11 (in Worten: Elf) beträgt.

Insbesondere können in Ausgestaltungen die Teilungswinkel derart gewählt sein, dass in Umfangsrichtung bei Nenndurchmessern von ≥10 mm und <12 mm genau 9 (in Worten: Neun) Drückstege vorhanden sind, und dass bei Nenndurchmessern von ≥12 und <20 mm genau 11 (in Worten: Elf) Drückstege vorhanden sind.

Für die angegebenen Drückstollenanzahlen ergaben sich für die genannten Nenndurchmesser besonders vorteilhafte Standzeiten.

In weiteren Ausführungsformen der Erfindung kann vorgesehen sein, dass zumindest eine der in Richtung der Längsachse des Gewindeformers orientierten, insbesondere mit einer Richtungskomponente parallel zur Längsachse orientierten, Flanken zumindest eines, optional eines jeden, Drückstollens jeweils eine erste und eine zweite Teilflankenfläche aufweist.

Bei der ersten Teilflankenfläche kann es sich beispielsweise um eine Furchfläche des Drückstollens, d.h. um eine bei der Herstellung eines Gewindes zumindest teilweise aktiv ins Material des Werkstücks eingreifende Umformfläche handeln.

Bei der zweiten Teilflankenfläche kann es sich beispielsweise um eine Freifurchfläche handeln, die der Furchfläche während der Gewindeherstellung nachgeschaltet ist, d.h. der zur Umformung führenden Furchfläche hinterhereilt.

Die Teilflankenflächen können beispielsweise an den zur Gewindeformerspitze hin orientierten Flanken der Drückstollen ausgebildet sein. Entsprechende Teilflankenflächen können in Längsrichtung jedoch auch beiderseits der Drückstollen vorhanden sein.

Die Teilflankenflächen können in auch unabhängig beanspruchbaren Ausführungsformen der Erfindung derart ausgebildet sein (insbesondere: geformt und/oder geschliffen), dass sich diese, bzw. zu den Teilflankenflächen eines Drückstollens parallele Ebenen, entlang einer, bevorzugt entlang lediglich einer, vom Kerndurchmesser des Gewindeformers nach außen verlaufenden Berührlinie (insbesondere: Schnittlinie, Schnittkante) unter einem von Null verschiedenen Winkel, bevorzugter Weise unter einem stumpfen Winkel, schneiden.

In Ausgestaltungen können die Teilflankenflächen derart ausgebildet sein, dass die Berührlinie bezüglich der Längsachse des Gewindeformers im Wesentlichen radial nach außen verläuft. Beispielsweise können die Teilflankenflächen derart ausgebildet sein, dass die Berührlinie in Axialprojektion bezüglich der Längsachse des Gewindeformers im Wesentlichen parallel zur radialen Richtung nach außen verläuft.

Unter dem Kerndurchmesser des Gewindeformers wird insbesondere der am Gewindeformer im Vertiefungsgrund der zwischen den Drückstollen ausgebildeten Vertiefungen gemessene Durchmesser verstanden. Der Kerndurchmesser ergibt sich insbesondere aus dem Außendurchmesser abzüglich der radialen Höhe/Länge der jeweiligen Drückstollen.

Bei entsprechender Ausgestaltung der Drückstollen können diese eine radial nach außen weisende im Wesentlichen synklastische Form aufweisen.

Insbesondere bei synklastischer Form, aber auch in anderen Ausführungsformen, kann in weiteren Ausführungsformen der Erfindung der Drückstollen einen Scheitelpunkt oder Scheitelbereich aufweisen, der als radial äußerster Punkt oder Bereich definiert sein kann. Die Berührlinie (insbesondere: Berührkante, Schnittlinie, Schnittkante) kann dabei und in weiteren Ausführungsformen der Erfindung durch den Scheitelpunkt des Drückstollens, oder im Wesentlichen zentral oder mittig durch einen entsprechenden Scheitelbereich verlaufen. Beispielsweise kann die Berührlinie in Radialprojektion betrachtet quer, insbesondere senkrecht, zu der entlang der Formgebungskurve durch den Scheitelpunkt bzw. das Zentrum des Scheitelbereichs verlaufenden Scheitelkurve des Drückstollens verlaufen.

Die Berührlinie resultiert insbesondere aus der oder wird festgelegt durch die bei der Herstellung des Gewindeformers verwendete(n) Schleifscheibenkinematik, und/oder der/die jeweils gewünschten Furch- und Freifurchwinkel am Gewindeformer. Die Formgebungskurve bzw. Scheitelkurve kann insbesondere derart festgelegt sein, dass sich vom Kerndurchmesser aus bis zumindest zur Hälfte des Druckstollens eine geradlinige Berührlinie ergibt bzw. abbildet.

In Ausgestaltungen kann vorgesehen sein, dass die Teilflankenflächen derart ausgebildet sind, und sich in der Berührlinie derart berühren (insbesondere: schneiden), dass bei vorgegebenem Radius der jeweilige Drückstollen an der Berührlinie in Schnittebenen senkrecht zur Formgebungslinie gemessen eine maximale Dicke aufweist.

Insbesondere bei Gewindeformern bei welchen zusätzlich zu der Bedingung für den maximalen Teilungswinkel die Teilflankenflächen derart ausgebildet sind, dass eine Berührlinie nach einer der beschriebenen Ausgestaltungen ausgebildet ist, konnten verbesserte Standfestigkeiten bei gleichzeitig präziser Gewindestruktur festgestellt werden.

Insbesondere hat sich gezeigt, dass eine wie hierin vorgeschlagene Wahl der Anzahl der pro Umlauf vorhandenen Drückstollen, insbesondere der vorgeschlagenen Anzahl an Drückstegen, in Abhängigkeit des Nenndurchmessers, in Kombination mit der nach einer der vorangehenden Ausgestaltungen beschriebenen Flankenstruktur (insbesondere: Flankenausbildung aus Teilflankenflächen) eine gegenüber herkömmlichen Gewindeformern verbesserte Standfestigkeit erreicht werden kann.

In Ausgestaltungen kann vorgesehen sein, dass Drückstollen, insbesondere dass jeder der Drückstollen, eine bezüglich der Längsachse (insbesondere: Rotationsachse) des Gewindeformers radial nach außen vorspringende Gewindeformerspitze aufweist. Bei der Gewindeformerspitze kann es sich beispielsweise um den weiter oben beschriebenen Scheitelpunkt oder Scheitelbereich handeln.

Unter einer nach außen vorspringenden Gewindeformerspitze soll insbesondere ein nach außen vorspringender, sich zu einer Spitze oder nach Art einer Spitze verjüngender Abschnitt des Gewindeformers verstanden werden. Wegen Vorteilen und vorteilhaften Wirkungen derartiger Ausgestaltungen wird auf die obigen Ausführungen im Zusammenhang mit einem nach außen gewandten Scheitelpunkt verwiesen, die entsprechend Anwendung finden.

In Ausgestaltungen und Varianten kann vorgesehen sein, dass der Drückstollen, insbesondere jeder der Drückstollen, bezüglich einer durch die Gewindeformerspitze und parallel zur Formgebungskurve verlaufenden Mittenebene asymmetrisch ausgebildet ist.

Mit einer asymmetrischen Ausgestaltung der Drückstollen kann insbesondere eine weitere Verbesserung der Standfestigkeit des Gewindeformers erreicht werden. Beispielsweise kann es von Vorteil sein, wenn das Integral der radialen Höhen des Drückstollens entlang der Formgebungskurve von einem Ende bis zur Gewindeformerspitze, insbesondere entlang der Furchkante, kleiner ist als das Integral der radialen Höhe des Drückstollens entlang der Formgebungskurve von der Gewindeformerspitze bis zum anderen Ende des Drückstollens, insbesondere entlang der Freifurchkante des Drückstollens.

Insbesondere bei Ausgestaltungen mit einer wie vorweg beschriebenen Gewindeformerspitze kann es von weiterem Vorteil sein, dass die Berührlinie durch die Gewindeformerspitze, insbesondere etwa durch den Apex der Gewindeformerspitze, verläuft, beispielsweise derart, dass die Berührlinie in Axialprojektion parallel zur Längsachse des Gewindeformers einen etwa radialen Verlauf zeigt. Insbesondere derartige Geometrien der Drückstollen können dazu beitragen, dass durch korrespondierende Umformprozesse Gewinde mit ausreichender Festigkeit und Stabilität erzeugt werden können, und bei entsprechend ausgebildeten Gewindeformern gleichzeitig vorteilhafte Standzeiten erreicht werden können.

In Ausgestaltungen kann vorgesehen sein, dass der Drückstollen, insbesondere jeder der Drückstollen, insbesondere jeder der im Anlaufbereich (insbesondere: Anfurchbereich) und/oder jeder der im Führungsbereich (insbesondere: Kalibrierungsbereich) vorhandene Drückstollen, eine, insbesondere in Gewindeformrichtung orientierte, radial nach außen weisende Furchkante, und eine, insbesondere entgegen der Gewindeformrichtung orientierte, radial nach außen weisende Freifurchkante aufweist.

Unter einer Furchkante soll insbesondere eine bezüglich der Längsachse radial nach außen weisende Kante (insbesondere: Linie, Kontur) verstanden werden, welche in Gewindeformrichtung (insbesondere: Gewindeformdrehrichtung) des Gewindeformers orientiert ist, und bei der Gewindeherstellung aktiv ins Material zugestellt wird. Entsprechend soll unter einer Freifurchkante insbesondere eine bezüglich der Längsachse radial nach außen weisende Kante (insbesondere: Linie, Kontur) verstanden werden, welche entgegen der Gewindeformrichtung (insbesondere: Gewindeformdrehrichtung) des Gewindeformers orientiert ist, wobei die Freifurchkante derart ausgebildet sein soll, dass im Vergleich zur Furchkante keine darüber hinausgehende Zustellung ins Material erfolgt.

Unter dem Begriff Anfurchbereich soll, wie Eingangs bereits erwähnt, ein im Bereich der vom Werkzeugschaft abgewandten Werkzeugspitze des Gewindeformers ausgebildeter Bereich verstanden werden, in welchem die Drückstolen eine Zunahme der radialen Zustellung oder des radialen Abstands von der Werkzeugachse zwischen benachbarten oder aufeinander folgenden Drückstollen bzw. Furchzähne zeigen. Wie bereits erwähnt wird die Zunahme der Zustellung auch als Umformhöhe bezeichnet.

Ferner soll unter dem Führungsbereich bzw. Kalibrierungsbereich, eine sich an den Anfurchbereich anschließende Zone verstanden werden, in welchem zumindest keine Zunahme der radialen Zustellung erfolgt, und die Zustellung konstant bleibt.

In Ausgestaltungen der Erfindung, insbesondere mit entsprechend ausgestalteten Furchkanten bzw. Freifurchkanten, kann vorgesehen sein, dass ein durch die Furchkante ausgebildeter (insbesondere: definierter) Furchwinkel bezüglich einer vorgegebenen Messtiefe größer ist als ein bei der vorgegebenen Messtiefe durch die Freifurchkante ausgebildeter (insbesondere: definierter) Freifurchwinkel.

Unter dem Begriff Messtiefe soll dabei verstanden werden, dass eine entsprechende Messung des Furchwinkels bzw. Freifurchwinkels auf radialer Höhe eines um die Messtiefe verringerten (lokalen) Außendurchmessers des Gewindeformers durchgeführt wird.

Zur Ermittlung des Furchwinkels bzw. des Freifurchwinkels wird in Axialprojektion, bzw. bezüglich der durch die Furchkante bzw. Freifurchkante verlaufenden Mittenebene des Drückstollens, im Schnittpunkt der Furchkante bzw. der Freifurchkante mit dem Messtiefenkreis eine Tangente an die Furchkante bzw. Freifurchkante gelegt. Der Furchwinkel bzw. Freifurchwinkel ist dann der Betrag desjenigen Winkels <90 Grad, der zwischen der entsprechenden Tangente und einer Referenztangente im genannten Schnittpunkt an den Messtiefenkreis ausgebildet ist.

Mit anderen Worten, ist der Furchwikel bzw. Freifurchwinkel der Betrag desjenigen Kippwinkels <90 Grad, um welchen die Tangente an die Furchkante bzw. Freifurchkante im Schnittpunkt zwischen Furchkante bzw. Freifurchkante und Messtiefenkreises gekippt werden muss, um diese in Deckung zu bringen mit der im Schnittpunkt an den Messtiefenkreises angelegten Referenztangente. Mit den angegebenen Bereichen für Furchwinkel und Freifurchwinkel kann insbesondere ein verschleißarmer Betrieb verbunden mit vergleichsweise hohen Standzeiten erreicht werden.

In Ausgestaltungen der Erfindung, bei welchen zumindest eine Flanke eines Drückstollens zwei Teilflankenflächen umfasst, ist erfindungsgemäß ebenfalls vorgesehen, dass die Drückstollenanzahl für Nenndurchmesser zwischen 8 mm und weniger als 10 mm genau 7 (in Worten: sieben) beträgt. Mit anderen Worten sind für Nenndurchmesser zwischen 8 mm und weniger als 10 mm genau sieben Drückstollen pro Umlauf, insbesondere für beliebige Umläufe um die Längsachse entlang der Formgebungskurve, vorhanden.

Insbesondere die Kombination der genannten Anzahl an Drückstollen mit entsprechenden Teilflankenflächen hat sich im Hinblick auf Standzeit und erreichbare Gewindequalität als vorteilhaft erwiesen.

In Ausgestaltungen kann vorgesehen sein, dass die Drückstollen in Gruppen zu mehreren Drückstegen angeordnet sind. Jeder Drücksteg kann in weiteren Ausgestaltungen im Wesentlichen parallel zur Längsachse (insbesondere: Rotationsachse) des Gewindeformers oder helikal zur Längsachse (insbesondere: Rotationsachse) des Gewindeformers verlaufen.

In Ausgestaltungen ist es insbesondere möglich, dass entlang der Formgebungskurve hintereinander gelegene (insbesondere: angeordnete) Drückstollen parallel zur Längsachse (insbesondere: Rotationsachse) mit dem einfachen oder einem mehrfachen der Gewindesteigung des Gewindeformers angeordnet sind.

In Ausgestaltungen kann vorgesehen sein, dass die Oberflächen der Drückstollen zumindest teilweise durch eine Politurbehandlung geglättet sind. Bei der Politurbehandlung kann es sich beispielswiese um ein Polieren mit Diamantstaub handeln, bzw. die Politurbehandlung kann einen entsprechenden Polierschritt mit Diamantstaub umfassen.

Die Erfindung wird nachstehend, insbesondere auch hinsichtlich weiterer Merkmale und Vorteile, anhand der Beschreibung von beispielhaften Ausführungsbeispielen und unter Bezugnahme auf die beiliegenden Zeichnungen näher erläutert.

Es zeigen

FIG. 1     perspektivische Ansicht eines Gewindeformers,

FIG. 2     eine vergrößerte Ansicht des Gewindeformerkopfs des Gewindeformers,

FIG. 3     eine Draufsicht auf den Gewindeformerkopf mit Blickrichtung auf die Gewindeformspitze hin,

FIG. 4     eine vergrößerte Darstellung eines Abschnitts eines Drückstollens des Gewindeformers, und

FIG. 5     eine Darstellung des Verlaufs der Furch- und Freifurchkanten eines Drückstollens.

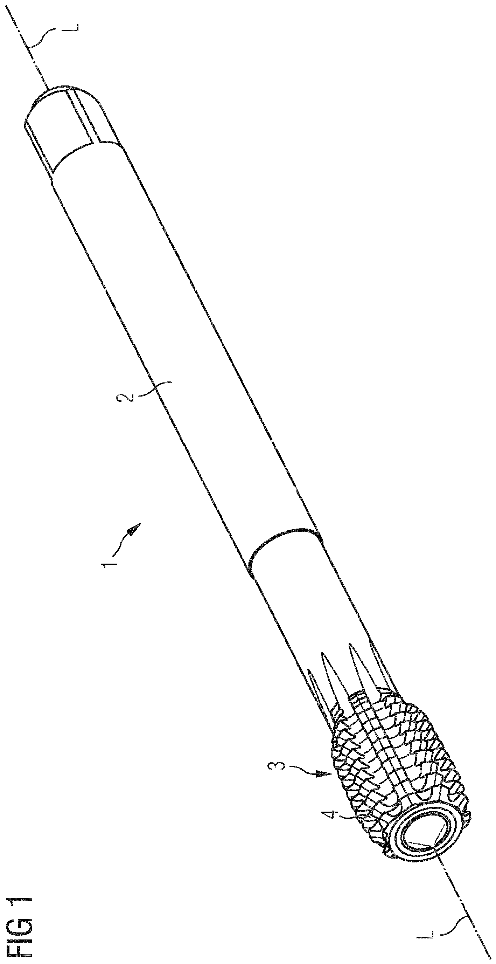

Einander entsprechende Teile und Komponenten in FIG. 1 bis FIG. 5 sind mit den gleichen Bezugzeichen bezeichnet.

FIG. 1 zeigt eine perspektivische Ansicht eines Gewindeformers 1 welcher ausgebildet ist zur spanlosen Erzeugung eines Gewindes, beispielsweise eines Innengewindes, an oder in einem Werkstück, beispielswiese aus einem der weiter oben genannten Materialien.

Der Gewindeformer 1 umfasst einen Werkzeugschaft 2 zum Einspannen in ein motorisch angetriebenes Futter (nicht gezeigt), an dessen einem Ende ein in Form eines Gewindeformerkopfs 3 ausgebildeter Arbeitsbereich ausgebildet ist.

Der Gewindeformerkopf 3 umfasst eine Vielzahl an Drückstollen 4, die schraubenförmig um die Längsachse L (insbesondere: Werkzeugachse, Rotationsachse), angeordnet sind, wobei der schraubenförmige Verlauf der Drückstollen 4, welcher u.a. das Gewindeformerprofil des Gewindeformers 1 definiert, dem Gewindegang des mit dem Gewindeformerkopf 3 erzeugbaren Gewindes entspricht. Die Drückstollen 4 sind im Wesentlichen derart angeordnet, dass deren Mittelebene entsprechend der Steigung des Gewindes geneigt, quer zur Längsachse L verläuft, und im Wesentlichen parallel zum schraubenförmigen Verlauf ausgerichtet ist.

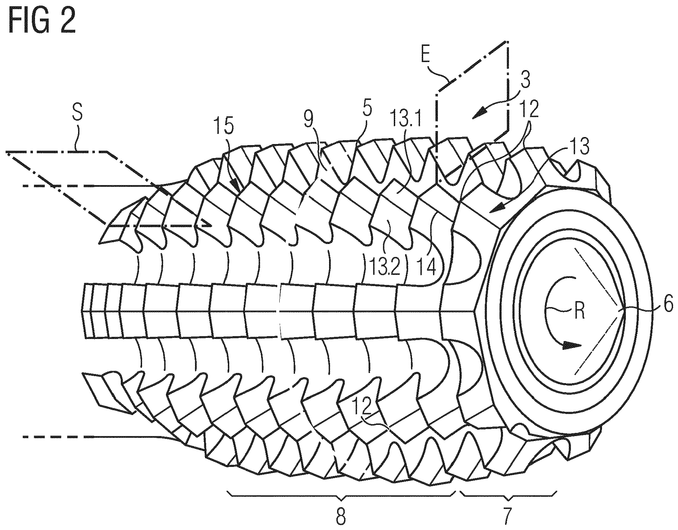

Wie insbesondere auch aus FIG. 2, die eine vergrößerte Ansicht des Gewindeformerkopfs 3 des Gewindeformers 1 zeigt, ersichtlich ist, umfasst der Gewindeformerkopf 3 im Gewindeprofil abwechselnd durch die Drückstollen 4 gebildete Erhöhungen und Vertiefungen bzw. Rillen, die im Wesentlichen parallel zum schraubenförmigen Verlauf angeordnet und ausgerichtet sind. Die Drückstollen 4 und jeweilige korrespondierende Vertiefungen weisen in Richtung der Längsachse L betrachtet normalerweise, und im gezeigten Ausführungsbeispiel denselben Abstand zueinander auf, was bedeutet, dass die Steigung der Gewindegänge konstant ist.

Die Drückstollen 4 des gezeigten beispielhaften Ausführungsbeispiels laufen im Querschnitt der Mittelebene radial nach außen spitzwinkelig zu, wobei diese im radial äußersten Bereich, insbesondere in deren Kopf- oder Scheitelbereich 5 abgerundet ausgebildet sein können.

Bei dem in den Figuren gezeigten Gewindefurcher 1 ist vorgesehen, dass der Arbeitsbereich, d.h. der Gewindeformerkopf 3, zu der vom Werkzeugschaft 2 abgewandt gelegenen Werkzeugspitze 6 hin in einem kegelförmigen Anfurchbereich 7 verjüngt ist, wobei die Drückstollen 4 im Anfurchbereich 7 bei weitgehend unveränderter Gesamtform sukzessive nach innen versetzt angeordnet sind.

Durch den Anfurchbereich 7 wird ein entsprechendes Gewindeprofil sukzessive durch die zunehmende radiale Zustellung der Drückstollen 4 erzeugt, und ferner wird ein Eindringen der Drückstollen 4 in die Werkstückoberfläche, z.B. die Innenwand einer entsprechenden Bohrung zur Erzeugung eines Innengewindes, erleichtert, wobei die an den Drückstollen 4 wirkenden Umformkräfte insgesamt reduziert werden können.

In dem sich an den Anlaufbereich 7 anschließenden Führungs- bzw. Kalibrier-bereich 8 bleibt die radiale Zustellung (insbesondere: die radiale Länge) der Drückstollen 4 im Wesentlichen konstant, wobei dieser Bereich zur Führung des Gewindefurchers in einem vom Anlaufbereich durch Umformung erzeugten Gewinde, und gegebenenfalls zum Nachglätten oder Kalibrieren des Gewindes dient. Zum Ende des Werkzeugschafts 2 hin kann der Führungs- bzw. Kalibrierbereich 8 in einen kegelförmig abnehmenden Bereich übergehen, in welchem die radiale Länge der Drückstollen 4 bis auf Werkzeugschaftniveau abnimmt.

Die Zunahme der radialen Zustellung zwischen benachbarten oder aufeinander folgenden Drückstollen 4 im Anlaufbereich/Anfurchbereich wird auch als Umformhöhe bezeichnet.

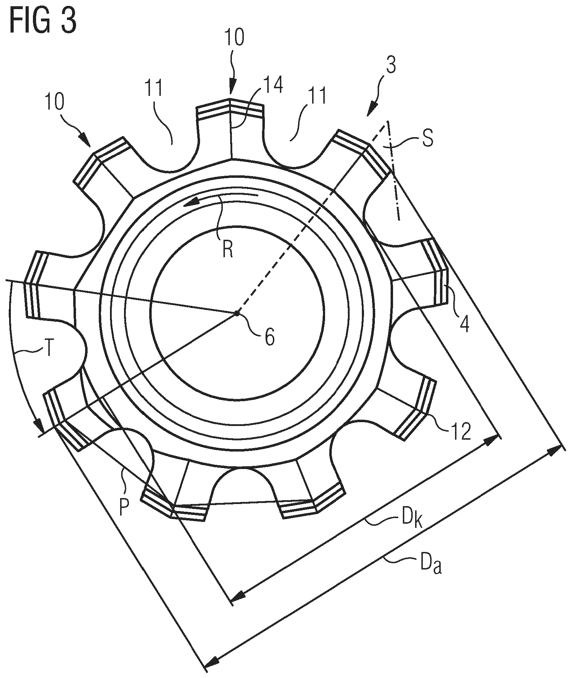

Zur Erzeugung eines Innengewindes mit einem Gewindefurcher 1 wird in der Regel zunächst eine Bohrung im Werkstück erzeugt, die einen kleineren Innendurchmesser als der Außendurchmesser Da, d.h. Nenndurchmesser Da, des Gewindefurchers 1 (siehe FIG. 3, die eine Draufsicht auf den Gewindeformerkopf mit Blickrichtung auf die Gewindeformspitze 6 hin zeigt) hat.

Anschließend wird der Gewindefurcher 1 mit der Werkzeugspitze voran mit definiertem Axialvorschub und definierter Rotation um die Längsachse L in Gewindeformrichtung R in die erzeugte Bohrung eingeführt.

Dabei werden die Drückstollen 4 und/oder zugehörige Umformflächen, wie z.B. axial ausgerichtete Flanken der Drückstollen 4, auf welche weiter unten noch näher eingegangen wird, in die Oberfläche der Bohrung gedrückt, so dass das Gewinde durch Materialumformung, insbesondere Kaltumformung, erzeugt wird.

Der Werkstoff des Werkstücks wird, wie bereits erwähnt, dabei plastisch verformt und radial in die Vertiefungen zwischen den Drückstollen 4 des Gewindeformerkopfs 3 verdrängt.

Das Drehmoment steigt beim Anfurchen bis zum Eingriff aller Drückstollen 4 an. Nach ausreichendem Eindrehen des Gewindefurchers 1 wird dieser unter Rotation in entgegengesetzter Richtung aus dem erzeugten Gewinde herausgedreht, wobei das Gleitreibungsmoment beim Herausdrehen kontinuierlich abnimmt.

Bei der Herstellung des Gewindes durch Umformung des Werkstücks treten an den Drückstollen 4 nicht unerhebliche Kräfte, insbesondere Reibungskräfte auf, die einerseits die Umformung des Werkstücks beeinflussen und andererseits als mechanische Belastungen die Standzeit der Drückstollen 4 maßgeblich beeinflussen. Insbesondere radiale Zustellung und Form der Drückstollen 4 beeinflussen nicht nur die auftretenden Kräfte, sondern auch die Qualität und Festigkeit des erzeugten Gewindes.

Bei dem erfindungsgemäßen Gewindeformer können, wie in FIG. 1 bis FIG. 4 gezeigt, die Drückstollen 4 derart längs der durch die Drückstollen 4 definierten, und um die Längsachse L helikal verlaufenden Formgebungskurve 9 angeordnet sein, dass die Drückstollen 4 in Gruppen zu mehreren Drückstegen 10 (siehe FIG. 3) angeordnet sind.

Jeder Drücksteg 10 des gezeigten beispielhaften Ausführungsbeispiels verläuft im Wesentlichen parallel zur Längsachse L. Jedoch sind auch andere Anordnungen der Drückstollen 4 möglich, beispielsweise derart, dass die Drückstege 10 helikal zur Längsachse L verlaufen, oder dass zumindest abschnittsweise längs der Längsachse L keine definierten Drückstege 10 ausgebildet sind, was beispielsweise bei variierenden Abständen der Drückstollen 4 in Richtung der Formgebungskurve 9 der Fall sein kann.

Durch die geordnete Anordnung der Drückstollen 4 in Gruppen zu mehreren Drückstegen 10 ergeben sich zwischen den in Umlaufrichtung benachbarten Drückstegen 10 Nuten 11, die beispielsweise dazu verwendet werden können, Schmier- und/oder Kühlmittel zuzuführen.

Weitere (nicht dargestellte) Schmier- und/oder Kühlmittelkanäle können beispielswiese im Inneren des Werkzeugschafts 2 und des Gewindeformerkopfs 3 ausgebildet sein, und z.B. in den Bereich der Werkzeugspitze 6 münden.

Bei dem in FIG. 1 bis FIG. 4 gezeigten Gewindeformer 1 handelt es sich um einen Gewindeformer 1 mit einem Nenndurchmesser Da, d.h. einem Außendurchmesser Da, von 10 mm. Insgesamt weist der gezeigte Gewindeformer 1 pro Umlauf um die Längsachse L, d.h. Werkzeugachse L, neun Drückstollen 4, bzw. Drückstege 10 auf. Insbesondere eine derartige Ausbildung und Anordnung der Drückstollen 4 hat sich im Hinblick auf geringen Verschleiß, hohe Standzeiten bei gleichzeitig hoher Gewindequalität und -festigkeit als vorteilhaft herausgestellt.

Insbesondere ist der in FIG. 1 bis FIG. 4 gezeigte Gewindeformer 1 derart ausgebildet, dass die Drückstollen 4 entlang der die Werkzeugachse L, d.h. Längsachse L, im Wesentlichen spiralförmig umlaufenden Formgebungskurve 9 jeweils unter einem vorgegebenen Teilungswinkel T (siehe FIG. 3) zueinander angeordnet sind.

Entsprechend der zu Grunde liegenden Erfindung und der der Erfindung zu Grunde liegender Erkenntnisse zu Verschleiß und Gewindequalität und/oder - festigkeit ist jeder Teilungswinkel T zwischen benachbarten Drückstollen 4 kleiner oder gleich einem vorgegebenen maximalen Teilungswinkel $T_{max}$, wobei der maximale Teilungswinkel $T_{max}$ so festgelegt ist, dass die folgende Bedingung:

$$T_{max} = \sin^{-1}((a \times ND^2 + b \times ND + c) \times 2 \times \pi),$$

erfüllt ist für:

i) $8 \leq ND < 10$ mit a=-0,0008, b=0,00705, c=0,1325, y=2;
ii) $10 \leq ND < 12$ mit a=1,7924/(2 $\times \pi$), b=0, c=0, y=-0,408; oder
iii) $12 \leq ND \leq 20$ mit a=0,751/(2 $\times \pi$), b=0, c=0, y=-0,104; wobei $T_{max}$ der maximale Teilungswinkel und ND der Betrag des in Millimeter gemessenen Nenngewindeformerdurchmessers sind.

Für den gezeigten Gewindeformer 1 mit Da=10 mm ergibt sich nach obiger Beziehung ein maximaler Teilungswinkel von etwa 45,76 Grad. Der tatsächliche bzw. effektive Teilungswinkel T der gezeigten beispielhaften Ausführungsform mit insgesamt neun Drückstollen 4, bzw. Drückstegen 10 pro Umlauf, liegt bei 40 Grad, ist also tatsächlich kleiner als der maximale Teilungswinkel Ta. Die tatsächlichen Teilungswinkel können insbesondere derart gewählt sein, dass diese kleiner oder gleich sind als der maximale Teilungswinkel, und die Druckstollenanzahl für jeden Umlauf einem ganzzahligen, beispielsweise ungeradzahligem, Wert entspricht.

Es soll angemerkt werden, dass es nicht erforderlich ist, dass sämtliche Teilungswinkel Ta gleich sind. Vielmehr ist es auch möglich, dass die Drückstollen 4 unter Verwendung von zwei oder mehr als zwei verschiedenen Teilungswinkeln Ta längs der Formgebungskurve angeordnet sind.

Bei Gewindeformern 1 gemäß der Erfindung mit einem Nenndurchmesser, d.h. Außendurchmesser Da, von 12 mm ergibt sich mit obiger Beziehung ein maximaler Teilungswinkel $T_{max}$ vom etwa 35,45 Grad

Wird die Anordnung der Drückstollen 4 derart gewählt, dass die Drückstollenanzahl für jeden Umlauf längs der Formgebungskurve einen ganzzahligen Wert, insbesondere einen ungeradzahligen, ganzzahligen Wert, aufweist, was sich im Hinblick auf Standzeiten und Gewindequalität als besonders vorteilhaft erwiesen hat, so können bei einem Nenndurchmesser Da von 12 mm beispielsweise elf Drückstollen 4 pro Umlauf vorgesehen werden, was einem effektiven Teilungswinkel T von 32,73 Grad entspricht, der unter dem zuvor genannten maximalen Teilungswinkel $T_{max}$ vom 35,45 Grad liegt.

Wie bereits erwähnt ergeben sich für maximale Teilungswinkel gemäß der angegebenen Beziehung Vorteile im Hinblick auf Standzeit des Gewindeformers 1, und Standzeit der Drückstollen 4, wobei insbesondere gleichzeitig vorteilhafte Gewindequalitäten und Gewindefestigkeiten erreicht werden können.

Insbesondere hat es sich im Rahmen der Erfindung erlangter Kenntnisse zur Gewindeformung als besonders vorteilhaft erwiesen, wenn der Teilungswinkel derart festgelegt ist, dass die Drückstollenanzahl der entlang der Formgebungskurve 9 aufeinanderfolgend vorhandenen Drückstollen 4 für jeden Umlauf längs der Formgebungskurve 9 für Nenndurchmesser Da zwischen 10 mm und weniger als 12 mm zumindest neun, insbesondere genau neun, beträgt, und dass die Drückstollenanzahl für Nenndurchmesser von 12 mm oder mehr als 12 mm, vorzugsweise für Nenndurchmesser zwischen 12 mm und 20 mm, zumindest elf, insbesondere genau elf, beträgt.

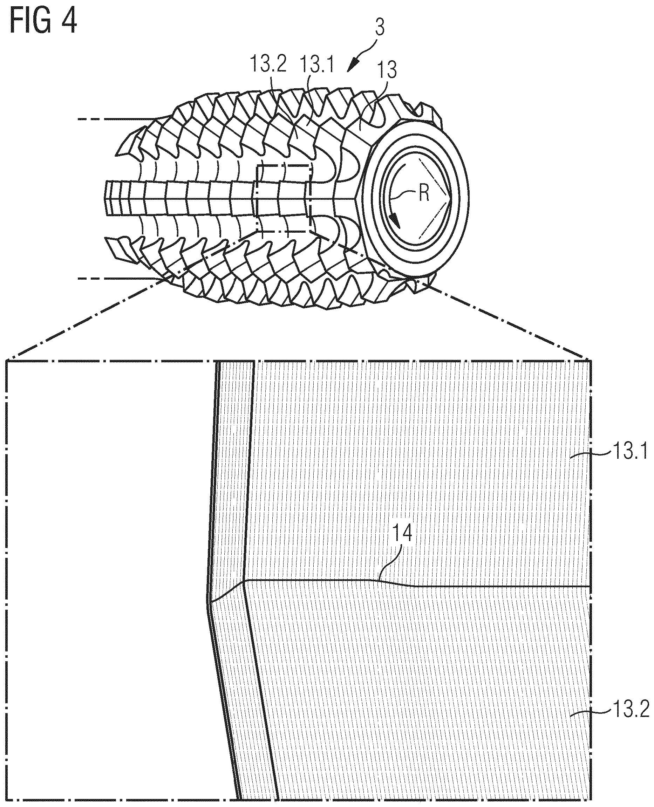

Wie aus FIG. 2, FIG. 3, und insbesondere aus FIG. 4, in welcher eine vergrößerte Darstellung eines Abschnitts eines Drückstollens 4 des Gewindeformers 1 gezeigt ist, ersichtlich ist, können die zur Werkzeugspitze 6 hin orientierten Flanken 13 der Drückstollen 4, jeweils eine erste Teilflankenfläche 13.1 und eine zweite Teilflankenfläche 13.2 aufweisen.

Unter der angegebenen Beziehung für den maximalen Teilungswinkel $T_{max}$ hat es sich im Hinblick auf verbesserte Standzeiten und/oder Gewindequalitäten als vorteilhaft erwiesen, wenn sich die erste 13.1 und zweite Teilflankenfläche 13.2 entlang einer vom Kerndurchmesser Dk des Gewindeformers 1 nach außen verlaufenden Berührlinie 14 schneiden, wobei sich die Teilflankenflächen 13 bevorzugt unter einem von Null verschiedenen, insbesondere stumpfen Winkel schneiden. Letzteres kann beispielsweise bedeuten, dass die Drückstollen 4 in Radialschnitten parallel zur Längsachse L in Umfangsrichtung an der Berührlinie 14 jeweils die größte, in Längsachsenrichtung gemessene Dicke aufweisen.

Im Beispiel des Gewindeformers 1 des gezeigten Ausführungsbeispiels verläuft die Berührlinie 14 bezüglich der Längsachse L des Gewindeformers 1 im Wesentlichen radial nach außen, was sich im Hinblick auf reduzierten Verschleiß als vorteilhaft erwiesen hat.

Aus FIG. 3 ist insbesondere ersichtlich, dass die Drückstollen 4 derart ausgebildet sein können, dass diese bezüglich der Längsachse L des Gewindeformers 1 jeweils eine radial nach außen vorspringende Gewindeformerspitze 12 ausbilden, wobei die Berührlinie 14 in die Gewindeformerspitze 12 mündet.

Die Gewindeformerspitzen 12 stellen die Bereiche der Drückstollen 4 mit größter radialer Zustellung bei der Gewindeerzeugung dar, und sind neben den Teilflankenflächen 13, und der Berührlinie 14 vergleichsweise hohen Reibungskräften und Drehmomenten ausgesetzt.

Die etwa am Kerndurchmesser Dk beginnenden Berührlinien 13 münden jeweils in einer Gewindeformerspitze 12, wobei radial nach außen weisende Kanten 15 der Drückstollen 4 eine korrespondierende Knickung aufweisen, so dass sich die Berührlinie 14 über die radial nach außen weisenden Kanten 15 erstreckt, was insbesondere aus FIG. 4 ersichtlich ist.

Damit ergibt sich für die gezeigte Drückstollengeometrie, dass bei der Gewindeerzeugung die radiale Zustellung und radiale/axiale Umformkräfte entgegen der Gewindeformrichtung R zur Berührlinie 14 hin zunehmen, und ab der Berührlinie wieder abnehmen. Insbesondere mit der speziellen Geometrie der Drückstollen 4 und dem durch den maximalen Teilungswinkel $T_{max}$ gegebenen (insbesondere: definierten, beschränkten) Abstand der Drückstollen 4, insbesondere der Gewindeformerspitzen 12, z.B. in Umfangsrichtung, können entsprechend der Erfindung vorteilhafte Standzeiten beim Gewindeformer 1 und vergleichsweise gute Gewindequalitäten und -festigkeiten erreicht werden.

Wie insbesondere aus FIG. 3 ersichtlich ist, ergeben im Umlaufrichtung jeweils benachbarte Gewindeformerspitzen 12 verbindende Verbindungslinien ein Polygon P, welches in FIG. 3 lediglich unter Einbeziehung dreier Gewindeformerspitzen 12 dargestellt ist. Im Beispiel des Gewindeformers 1 der FIG. 1 bis FIG. 4 weist jedes für einen Umlauf längs der Formgebungskurve 9 betrachtete Polygon neun (in Ziffern: 9) Ecken auf.

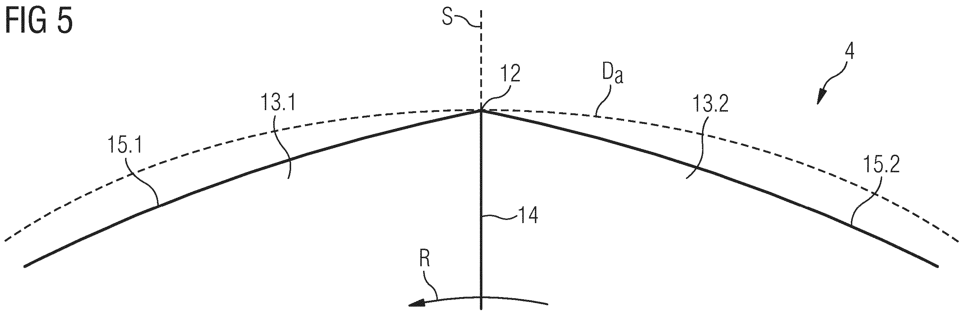

Wie aus FIG. 2 und FIG. 3 ersichtlich ist, sind im vorliegenden Beispiel alle Drückstollen 4 derart ausgebildet, dass diese bezüglich durch die Gewindeformerspitze 4 und senkrecht zur Formgebungskurve 9 verlaufenden Schnitteben S (siehe Beispielhaft FIG. 3, 5) asymmetrisch ausgebildet sind.

Speziell ist der Gewindeformer 1 des gezeigten Ausführungsbeispiels derart ausgebildet, dass jeder der Drückstollen 4 eine radial nach außen weisende Furchkante 15.1 aufweist, welche in Gewindeformrichtung R orientiert ist und radial an die erste Teilflankenfläche 13.1 anschließt. Insoweit kann die erste Teilflankenfläche 13.1 als Furchfläche bezeichnet werden.

Ferner umfasst jeder der Drückstollen 4 eine radial nach außen weisende, und entgegen der Gewindeformrichtung R orientierte Freifurchkante 15.2 auf, die radial an die zweite Teilflankenfläche 13.2 anschließt. Insoweit kann die zweite Teilflankenfläche 13.2 als Freifurchfläche bezeichnet werden.

Gemäß einer Ausgestaltung kann, wie in FIG. 5 gezeigt, der Drückstollen 4 derart ausgebildet sein, dass ein durch die Furchkante 15.1 definierter Furchwinkel bezüglich einer vorgegebenen Messtiefe größer ist als ein bei der vorgegebenen Messtiefe durch die Freifurchkante 15.2 definierter Freifurchwinkel.

Bei Gewindeformern 1, welche entsprechend der beschriebenen Berührungslinie 14 und/oder entsprechend der Asymmetrie betreffend Furchkante 15.1 und Freifurchkante 15.2, bzw. Furchwinkel und Freifurchwinkel ausgebildet sind, sind genau sieben Drückstollen 4 für Nenndurchmesser zwischen 8 mm und weniger als 10 mm vorhanden. Auch für solche Gewindeformer ergeben sich vorteilhafte Standzeiten und Gewindequalitäten und/oder Gewindefestigkeiten.

In weiteren Ausgestaltungen kann vorgesehen sein, dass zumindest die ersten und zweiten Teilflankenflächen 13 durch eine Politurbehandlung, beispielsweise mit Diamantstaub, geglättet sind. Insbesondere dadurch lassen sich zusätzlich zu der durch die spezielle Anordnung und Geometrie der vorgeschlagenen Drückstollen 4 weitere Vorteile im Hinblick auf Standzeit und Gewindequalität erreichen.

Wie aus den beschriebenen Ausführungsbeispielen ersichtlich wird, ermöglicht der hierin vorgeschlagene Gewindeformer 1 die Herstellung eines Gewindes, wobei ein entsprechendes Verfahren die folgenden Schritte aufweisen kann:

- Bereitstellen des Werkstücks;
- Bereitstellen eines Gewindeformers nach einer der hierin vorgeschlagenen Ausgestaltungen der Erfindung;
- Erzeugen des Gewindes unter gleichzeitiger Rotation und axialtranslatorischer Bewegung des Gewindeformers, wobei der Gewindeformer mit vorgegebener Rotationsgeschwindigkeit und vorgegebener Axialgeschwindigkeit bewegt wird.

Bei der Erzeugung des Gewindes werden die Furchkanten 13.1 und die Furchflanken 13.1, d.h. die ersten Teilflankenflächen 13.1, sowie die Gewindeformerspitzen 12 insbesondere im Anfurchbereich 7 radial zugestellt, wodurch das Werkstück an der bearbeiteten Oberfläche umgeformt, insbesondere kalt umgeformt, wird, entsprechend der axialen Aufeinanderfolge der Drückstollen 4 und Vertiefungen zwischen den Drückstollen 4, so dass ein der Struktur des Gewindeformerkopfs 3 entsprechendes Gewinde erzeugt wird.

Im Bereich des Führungs- und Kalibrierbereichs 8 erfolgt keine weitere Zustellung in radialer Richtung (abgesehen der ggf. auftretenden Zustellung auf Grund von elastischer Rückformung des Materials des Werkstücks). Wie bereits erwähnt, ist der Führungs- und Kalibrierbereich 8 dazu vorgesehen, den Gewindeformerkopf 3 in dem vom Anfurchbereich 7 erzeugen Gewinde zu führen und/oder das bereits erzeugte/bestehende Gewinde nachzuformen, bzw. zu kalibrieren.

Insgesamt zeigt sich, dass mit dem hierin vorgeschlagenen Gewindeformer zur spanlosen Erzeugung eines Gewindes mit einer Vielzahl an Drückstollen 4, welche unter jeweils vorgegebenen Teilungswinkeln T entlang einer Formgebungskurve 9 angeordnet sind, insbesondere vorteilhafte Standzeiten bei gleichzeitig vergleichsweise guter Gewindequalität und Gewindefestigkeit erreicht werden können.

**Bezugszeichen liste**

| | |
|---|---|
| 1 | Gewindeformer |
| 2 | Werkzeugschaft |
| 3 | Gewindeformerkopf |
| 4 | Drückstollen |
| 5 | Scheitelbereich |
| 6 | Werkzeugspitze |
| 7 | Anfurchbereich |
| 8 | Führungs-, Kalibrierbereich |
| 9 | Formgebungskurve |
| 10 | Drücksteg |
| 11 | Nut |
| 12 | Gewindeformerspitze |
| 13 | Flanke |
| 13.1 | erste Teilflankenfläche |
| 13.2 | zweite Teilflankenfläche |
| 14 | Berührlinie |
| 15 | Kante |
| 15.1 | Furchkante |
| 15.2 | Freifurchkante |

| | |
|---|---|
| L | Längsachse |
| Da | Außendurchmesser |
| Dk | Kerndurchmesser |
| T | Teilungswinkel |
| Tmax | maximaler Teilungswinkel |
| E | Mittelebene |
| P | Polygon |
| R | Gewindeformrichtung |
| S | Schnittebene |

**Patentansprüche**

1.  Gewindeformer (1) mit einem Nenngewindeformerdurchmesser zwischen 8 mm und 20 mm, zur spanlosen Erzeugung eines Gewindes umfassend einen Gewindeformungsabschnitt (7, 8) mit einer Vielzahl an Drückstollen (4), welche unter jeweils vorgegebenen Teilungswinkeln (T) zwischen benachbarten Drückstollen (4) entlang einer die Werkzeugachse (L), insbesondere im Wesentlichen spiralförmig, umlaufenden Formgebungskurve (9) angeordnet sind, wobei jeder Teilungswinkel (T) kleiner oder gleich einem vorgegebenen maximalen Teilungswinkel ($T_{max}$) ist, **dadurch gekennzeichnet, dass** der maximale Teilungswinkel ($T_{max}$) so festgelegt ist, dass die folgende Bedingung:

$$T_{max} = \sin^{-1}((a \times ND^y + b \times ND + c) \times 2 \times \pi);$$

erfüllt ist für

    i) $8 \leq ND < 10$ mit a=-0,0008, b=0,00705, c=0,1325, y=2;
    ii) $10 \leq ND < 12$ mit a=1,7924/(2 x $\pi$), b=0, c=0, y=-0,408; oder
    iii) $12 \leq ND \leq 20$ mit a=0,751/(2 x $\pi$), b=0, c=0, y=-0,104;

wobei Tmax der maximale Teilungswinkel und ND der Betrag des in Millimeter gemessenen Nenngewindeformerdurchmessers (Da) sind, wobei der Teilungswinkel (T) so festgelegt ist, dass die Drückstollenanzahl für zumindest einen oder jeden Umlauf längs der Formgebungskurve (9) für Nenngewindeformerdurchmesser (Da) zwischen 8 mm und weniger als 10 mm genau 7 beträgt.

2. Gewindeformer (1) nach Anspruch 1, wobei zumindest eine der in Richtung einer oder der Längsachse (L) des Gewindeformers (1) orientierten Flanken (13) zumindest eines, optional eines jeden, Drückstollens (4), jeweils eine erste und eine zweite Teilflankenfläche (13.1, 13.2) aufweist, welche sich entlang einer vom Kerndurchmesser (Dk) des Gewindeformers (1) nach außen verlaufenden Berührlinie (14) unter einem von Null verschiedenen Winkel schneiden, wobei die Berührlinie (14) bezüglich der Längsachse (L) des Gewindeformers (1) optional im Wesentlichen radial nach außen verläuft, insbesondere, in Axialprojektion betrachtet, im Wesentlichen parallel zur radialen Richtung nach außen verläuft.

3. Gewindeformer (1) nach Anspruch 2, wobei die Berührlinie (14) durch die Gewindeformerspitze (12) verläuft, und die Berührlinie (14) in Axialprojektion parallel zur Längsachse (L) des Gewindeformers (1) betrachtet vorzugsweise einen etwa radialen Verlauf zeigt.

4. Gewindeformer nach Anspruch 2 oder Anspruch 3, bei dem die Formgebungskurve bzw. Scheitelkurve derart festgelegt ist, dass sich vom Kerndurchmesser aus bis zumindest zur Hälfte des Druckstollens eine geradlinige Berührlinie ergibt bzw. abbildet
und /oder
bei dem die Teilflankenflächen derart ausgebildet sind, und sich in der Berührlinie derart berühren oder schneiden, dass bei vorgegebenem Radius der jeweilige Drückstollen an der Berührlinie in Schnittebenen senkrecht zur Formgebungslinie gemessen eine maximale Dicke aufweist.

5. Gewindeformer (1) nach einer der Ansprüche 1 bis 4, wobei jeder der Teilungswinkel (T) des Weiteren derart gewählt ist, dass die Drückstollenanzahl der entlang der Formgebungskurve (9) aufeinanderfolgend vorhandenen Drückstollen (4) für jeden Umlauf längs der Formgebungskurve (9) einen ganzzahligen Wert, insbesondere einen ungeradzahligen, ganzzahligen Wert, aufweist, wobei optional die Teilungswinkel (T) derart gewählt sind, dass die Drückstollenanzahl der entlang der Formgebungskurve (9) aufeinanderfolgend vorhandenen Drückstollen (4) durch einen ungeradzahligen Wert gegeben ist.

6. Gewindeformer (1) nach Anspruch 5, wobei der Teilungswinkel (T) derart festgelegt ist, dass die Drückstollenanzahl der entlang der Formgebungskurve (9) aufeinanderfolgend vorhandenen Drückstollen (4) für jeden Umlauf längs der Formgebungskurve (9) für Nenndurchmesser (Da) zwischen 10 mm und weniger als 12 mm zumindest 9, insbesondere genau 9, beträgt, und dass die Drückstollenanzahl für Nenndurchmesser (Da) von 12 mm oder mehr als 12 mm, vorzugsweise für Nenndurchmesser (Da) zwischen 12 mm und 20 mm, zumindest 11, insbesondere genau 11, beträgt.

7. Gewindeformer (1) nach einem der Ansprüche 1 bis 6, wobei der Drückstollen (4) eine bezüglich der Längsachse (L) des Gewindeformers (1) radial nach außen vorspringende Gewindeformerspitze (12) aufweist, und wobei der Drückstollen (4) bezüglich einer durch die Gewindeformerspitze (12) und parallel zur Formgebungskurve (9) verlaufenden Mittelebene (E) optional asymmetrisch ausgebildet ist.

8. Gewindeformer (1) nach einem der Ansprüche 1 bis 7, wobei der Drückstollen (4) eine radial nach außen weisende Furchkante (15.1), und eine radial nach außen weisende Freifurchkante (15.2) aufweist, wobei ein durch die Furchkante (15.1) definierter Furchwinkel bezüglich einer vorgegebenen Messtiefe größer ist als ein bei der vorgegebenen Messtiefe durch die Freifurchkante (15.2) definierter Freifurchwinkel.

**9.** Gewindeformer (1) nach einem der Ansprüche 1 bis 8, wobei die Drück-stollen (4) in Gruppen zu mehreren Drückstegen (10) angeordnet sind, wobei jeder Drücksteg (10) optional im Wesentlichen parallel zur Längsachse (L) oder helikal zur Längsachse (L) verläuft, und entlang der Formgebungskurve (9) hintereinander gelegene Drückstollen (4) parallel zur Längsachse (L) mit dem einfachen oder einem mehrfachen der Gewindesteigung des Gewindeformers (1) angeordnet sind.

## Claims

**1.** A thread former (1) with a nominal thread former diameter between 8 mm and 20 mm, for the chipless production of a thread, comprising a thread forming section (7, 8) with a plurality of spinning studs (4) which are arranged at respective predetermined pitch angles (T) between adjacent spinning studs (4) along a forming curve (9) running around the tool axis (L), in particular substantially spirally, around the tool axis (L), each pitch angle (T) being smaller than or equal to a predetermined maximum pitch angle ($T_{max}$), **characterised in that** the maximum pitch angle ($T_{max}$) is set such that the following condition is met:

$$T_{max} = \sin^{-1}((a \times ND^y + b \times ND + c) \times 2 \times \pi);$$

is fulfilled for

    i) $8 \leq ND < 10$ with a=-0.0008, b=0.00705, c=0.1325, y=2;
    ii) $10 \leq ND < 12$ with a=1.7924/(2 × $\pi$), b=0, c=0, y=-0.408; or
    iii) $12 \leq ND \leq 20$ with a=0.751/(2 × $\pi$), b=0, c=0, y=-0.104;

where $T_{max}$ is the maximum pitch angle and ND is the amount of nominal tapping diameter (Da) measured in millimetres, the pitch angle (T) being set such that the number of spinning studs for at least one or each turn along the forming curve (9) for nominal tapping diameters (Da) between 8 mm and less than 10 mm is exactly 7.

**2.** Thread former (1) according to claim 1, wherein at least one of the flanks (13), oriented in the direction of one or the longitudinal axis (L) of the thread former(1), of at least one, optionally of each, spinning stud (4) has in each case a first and a second partial flank surface (13.1, 13.2) which intersect at a non-zero angle along a contact line (14) extending outwards from the core diameter (Dk) of the thread former (1), the contact line (14) optionally extending substantially radially outwards with respect to the longitudinal axis (L) of the thread former (1), in particular, viewed in axial projection, extending substantially parallel to the radial direction outwards.

**3.** Thread former (1) according to claim 2, wherein the contact line (14) extends through the tap tip (12), and the contact line (14), viewed in axial projection parallel to the longitudinal axis (L) of the thread former (1), preferably shows an approximately radial course.

**4.** Thread former according to claim 2 or claim 3, in which the shaping curve or apex curve is determined in such a way that a straight line of contact is produced from the core diameter to at least half of the pressure stud; and /or
in which the partial flank surfaces are formed in such a way and touch or intersect in the contact line in such a way that, at a predetermined radius, the respective pressure stud has a maximum thickness at the contact line measured in sectional planes perpendicular to the shaping line.

**5.** Thread former (1) according to any one of claims 1 to 4, wherein each of the pitch angles (T) is further selected such that the number of spinning studs (4) successively present along the forming curve (9) has an integer value for each turn along the forming curve (9), in particular an odd integer value, wherein optionally the pitch angles (T) are selected in such a way that the number of spinning studs (4) successively present along the shaping curve (9) is given by an odd integer value.

**6.** Thread former (1) according to claim 5, wherein the pitch angle (T) is determined in such a way that the number of spinning studs (4) successively present along the forming curve (9) for each turn along the forming curve (9) for nominal diameters (Da) between 10 mm and less than 12 mm is at least 9, in particular exactly 9, and in that the number of pressure lugs for nominal diameters (Da) of 12 mm or more than 12 mm, preferably for nominal diameters (Da) between 12 mm and 20 mm, is at least 11, in particular exactly 11.

7. Thread former (1) according to any one of claims 1 to 6, wherein the spinning stud (4) has a tap tip (12) projecting radially outwards with respect to the longitudinal axis (L) of the thread former (1), and wherein the spinning stud (4) is optionally asymmetrical with respect to a centre plane (E) extending through the tap tip (12) and parallel to the forming curve (9).

8. Thread former (1) according to any one of claims 1 to 7, wherein the spinning stud (4) has a radially outwardly facing furrow edge (15.1) and a radially outwardly facing free furrow edge (15.2), wherein a furrow angle defined by the furrow edge (15.1) with respect to a predetermined measuring depth is greater than a free furrow angle defined by the free furrow edge (15.2) at the predetermined measuring depth.

9. Thread former (1) according to any one of claims 1 to 8, wherein the spinning studs (4) are arranged in groups of a plurality of spinning bars (10), each spinning bar (10) optionally being substantially parallel to the longitudinal axis (L) or helical to the longitudinal axis (L), and spinning studs (4) located one behind the other along the forming curve (9) are arranged parallel to the longitudinal axis (L) with a single or a multiple of the thread pitch of the thread former (1).

## Revendications

1. Taraud (1) avec un diamètre nominal de taraudage compris entre 8 mm et 20 mm, pour la production d'un filet sans enlèvement de copeaux, comprenant une section de taraudage (7, 8) avec une pluralité de barrettes de pression (4), qui sont disposées sous des angles de pas (T) prédéfinis entre des barrettes de pression (4) voisines le long d'une courbe de taraudage qui suit l'axe de l'outil (L), en particulier essentiellement en forme de spirale, chaque angle de pas (T) étant inférieur ou égal à un angle de pas maximal prédéfini ($T_{max}$), **caractérisé en ce que** l'angle de pas maximal ($T_{max}$) est fixé de telle sorte que la condition suivante :

$$T_{max} = \sin^{-1}((a \times ND^y + b \times ND + c) \times 2 \times \pi);$$

est remplie pour

i) $8 \leq ND < 10$ avec a=-0,0008, b=0,00705, c=0,1325, y=2;
ii) $10 \leq ND < 12$ avec a=1,7924/(2 x $\pi$), b=0, c=0, y=-0,408; ou
iii) $12 \leq ND \leq 20$ avec a=0,751/(2 x $\pi$), b=0, c=0, y=-0,104;

où $T_{max}$ est l'angle de pas maximum et ND est la valeur du diamètre nominal de la filière (Da) mesuré en millimètres, l'angle de pas (T) étant déterminé de telle sorte que le nombre de tasseaux de pression soit exactement égal à 7 pour au moins un tour ou chaque tour le long de la courbe de formage (9) pour des diamètres nominaux de la filière (Da) compris entre 8 mm et moins de 10 mm.

2. Taraud (1) selon la revendication 1, dans lequel au moins l'un des flancs (13) orientés dans la direction d'un ou de l'axe longitudinal (L) du taraud (1) d'au moins un, en option de chaque, tasseau de pression (4), présente respectivement une première et une deuxième surface de flanc partielle (13.1, 13.2) qui se coupent le long d'une ligne de contact (14) s'étendant vers l'extérieur à partir du diamètre de noyau (Dk) du taraud (1) sous un angle différent de zéro, la ligne de contact (14) s'étendant en option essentiellement radialement vers l'extérieur par rapport à l'axe longitudinal (L) du taraud (1), en particulier, vu en projection axiale, essentiellement parallèlement à la direction radiale vers l'extérieur.

3. Taraud (1) selon la revendication 2, dans lequel la ligne de contact (14) s'étend à travers la pointe du taraud (12), et la ligne de contact (14), vue en projection axiale parallèlement à l'axe longitudinal (L) du taraud (1), présente de préférence un tracé à peu près radial.

4. Taraud selon la revendication 2 ou la revendication 3, dans lequel la courbe de formage ou la courbe de sommet est déterminée de telle sorte qu'une ligne de contact rectiligne se forme ou se reproduit à partir du diamètre du noyau jusqu'à au moins la moitié du tube de pression;
et / ou
dans lequel les surfaces des flancs partiels sont réalisées de telle sorte qu'elles se touchent ou se coupent sur la ligne de contact de telle sorte que, pour un rayon donné, la barre de pression respective présente une épaisseur maximale sur la ligne de contact, mesurée dans des plans de coupe perpendiculaires à la ligne de façonnage.

5. Taraud (1) selon l'une quelconque des revendications 1 à 4, dans lequel chacun des angles de pas (T) est en outre choisi de manière à ce que le nombre de crampons de poussée (4) présents successivement le long de la courbe de formage (9) ait, pour chaque tour le long de la courbe de formage (9), une valeur entière, en particulier une valeur entière impaire, les angles de pas (T) étant choisis en option de telle sorte que le nombre de tasseaux de pression des tasseaux de pression (4) présents successivement le long de la courbe de formage (9) soit donné par une valeur impaire.

6. Taraud (1) selon la revendication 5, dans lequel l'angle de pas (T) est déterminé de telle sorte que le nombre de crampons de poussée (4) présents successivement le long de la courbe de formage (9) soit au moins égal à 9 pour chaque tour le long de la courbe de formage (9) pour des diamètres nominaux (Da) compris entre 10 mm et moins de 12 mm, en particulier exactement 9, et en ce que le nombre de galets de pression est d'au moins 11, en particulier exactement 11, pour des diamètres nominaux (Da) de 12 mm ou plus de 12 mm, de préférence pour des diamètres nominaux (Da) compris entre 12 mm et 20 mm.

7. Taraud (1) selon l'une quelconque des revendications 1 à 6, dans lequel la tige de pression (4) présente une pointe de taraudage (12) faisant saillie radialement vers l'extérieur par rapport à l'axe longitudinal (L) du taraudage (1), et dans lequel la tige de pression (4) est réalisée de manière optionnellement asymétrique par rapport à un plan médian (E) passant par la pointe de taraudage (12) et parallèle à la courbe de formage (9).

8. Taraud (1) selon l'une quelconque des revendications 1 à 7, dans lequel la tige de poussée (4) présente une arête de sillon (15.1) orientée radialement vers l'extérieur et une arête de passage libre (15.2) orientée radialement vers l'extérieur, un angle de sillon défini par l'arête de sillon (15.1) par rapport à une profondeur de mesure prédéfinie étant supérieur à un angle de passage libre défini par l'arête de passage libre (15.2) à la profondeur de mesure prédéfinie.

9. Taraud (1) selon l'une quelconque des revendications 1 à 8, dans lequel les barrettes de pression (4) sont disposées en groupes de plusieurs barrettes de pression (10), chaque barrette de pression (10) étant optionnellement sensiblement parallèle à l'axe longitudinal (L) ou hélicoïdale par rapport à l'axe longitudinal (L), et des barrettes de pression (4) situées l'une derrière l'autre le long de la courbe de formage (9) sont disposées parallèlement à l'axe longitudinal (L) avec le pas de filetage simple ou multiple du taraudage (1).

FIG 1

FIG 2

# FIG 3

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112009005043 T5
- DE 102012100734 A1
- JP 2002370126 A